# EUROPÄISCHE PATENTANMELDUNG

(11) **EP 0 979 857 A2**
(43) Veröffentlichungstag der Anmeldung: **16.02.2000**
(21) Anmeldenummer: 98117764.5
(22) Anmeldetag: 17.09.1998
(51) Int. Cl.: C10J 3/66, C10J 3/54

(54) **Verfahren und Vorrichtung zum Vergasen von Biomasse, insbesondere Holzstoffen**

(30) Priorität: 12.08.1998 DE 19836428
(71) Anmelder: Siempelkamp Guss- und Anlagentechnik Holding GmbH & Co., 47803 Krefeld (DE)
(72) Erfinder: Lipp, Jürgen, Dr, 01705 Pesterwitz (DE); Weiss, Eberhard, Dr, 01279 Dresden (DE); Böhning, Dorith, 01279 Dresden (DE)
(74) Vertreter: Honke, Manfred, Dr.-Ing.

(57) **Zusammenfassung**

Es handelt sich um ein Verfahren zum Vergasen von Biomasse, insbesondere Holzstoffen, wonach in einer ersten Vergasungsstufe eine Festbettentgasung bei Temperaturen bis zu 600 °C und in einer nachgeschalteten zweiten Vergasungsstufe eine Wirbelschichtvergasung und eine Crackung bei Temperaturen zwischen 800 °C und 1000 °C durchgeführt wird. Insoweit wird ein zweistufiges Vergasungsverfahren verwirklicht, bei dem anstelle der Festbettentgasung in der ersten Vergasungsstufe auch eine Wirbelschichtentgasung stattfinden kann, so daß dann ein zweistufiges Wirbelschichtvergasungsverfahren verwirklicht wird.

## Beschreibung

Die Erfindung betrifft ein Verfahren zur Vergasung von Biomasse, insbesondere Holzstoffen o. dgl. Vergasungsstoffen.

Es sind einstufige Vergasungsverfahren für Biomasse und insbesondere Holzstoffe bekannt, wonach bei niedrigen Temperaturen eine Entgasung und bei höheren Temperaturen eine Vergasung der Kohlenstoffanteile erfolgt. Die Entgasung - auch als Pyrolyse bezeichnet - beginnt bereits unter 200 °C, dagegen findet eine effektive Vergasung der Kohlenstoffanteile zu Kohlenmonoxid (CO) bei höheren Temperaturen von 800 °C bis 1000 °C statt. Während die Entgasung verhältnismäßig schnell vonstatten geht, sind für die vollständige Vergasung der Kohlenstoffanteile große Verweilzeiten bzw. hohe Stoff- und Wärmeübergangsbedingungen erforderlich. Wie für die Kohlenstoffanteile ist auch für sogenannte hochmolekulare Kohlenwasserstoffverbindungen, z. B. Teere, eine Reaktion bei hohen Anforderungen an die Reaktionsbedingungen zu bewerkstelligen. Das gilt insbesondere in bezug auf die Homogenität dieser Reaktionsbedingungen im Reaktionsraum. Die Entgasung bei niedrigen Temperaturen in einer Reaktionszone mit hoher Inhomogenität bedingt höhere Teeranteile im erzeugten Gas und führt zu einem niedrigen, verhältnismäßig schlechten Vergasungsgrad. - Nach den bisherigen einstufigen Vergasungsverfahren werden die hohen Anforderungen an die Gasqualität für eine nachfolgende Verbrennung, z. B. in einem Gasmotor zur Elektroenergieerzeugung, noch nicht erreicht. Das gilt insbesondere für einen störungs- und wartungsarmen Dauerbetrieb eines solchen Gasmotors. - Hier setzt die Erfindung ein.

Der Erfindung liegt die Aufgabe zugrunde, ein Verfahren zum Vergasen von Biomasse, insbesondere Holzstoffen, anzugeben, wonach eine vollständige Vergasung sowohl der Kohlenstoffanteile als auch der hochmolekularen Kohlen-Wasserstoffverbindungen in einfacher und funktionsgerechter Weise erreicht wird. Darüber hinaus soll eine für die Durchführung des Verfahrens geeignete Vorrichtung geschaffen werden.

Zur Lösung der gestellten Aufgabe ist Gegenstand der Erfindung ein

Verfahren zum Vergasen von Biomasse, insbesondere Holzstoffen o. dgl. Vergasungsstoffen, wonach in einer ersten Vergasungsstufe eine Festbettentgasung bei Temperaturen bis zu 600 °C und in einer nachgeschalteten zweiten Vergasungsstufe eine Wirbelschichtvergasung bei Temperaturen zwischen 800 °C und 1000 °C durchgeführt wird. - Diese Maßnahmen der Erfindung haben zur Folge, daß nicht nur eine vollständige Vergasung der Kohlenstoffanteile (Koks, Holzkohle) erreicht wird, sondern auch die hochmolekularen Kohlen-Wasserstoffverbindungen gespalten bzw. gecrackt und vergast werden. Im einzelnen werden sowohl die Reaktionen der Holzkohle als auch die des teerbeladenen Gases bei höheren Temperaturen vollständig durchgeführt. Dabei wird gleichzeitig die Holzkohle als Katalysator für die Crackung genutzt. Außerdem werden auch Additivmaterialien als Katalysatoren im Zuge der Wirbelschichtvergasung eingesetzt , um die Reaktionsbedingungen zu verbessern und ggf. auch gleichzeitig Schadstoffe zu binden. Um die katalytische Wirkung der Holzkohle zu vergrößern, muß der Masseanteil der Holzkohle im Zuge der Wirbelschichtvergasung im Vergasungsapparat erhöht werden. Das gelingt durch eine Vergrößerung der Verweilzeit der Holzkohle, indem Primärvergasungsmittel und Sekundärvergasungsmittel in die sonst homogene Wirbelschicht eingeblasen werden. Bei diesen Vergasungsmitteln kann es sich um Frischluft, Wasserdampf usw. handeln. Tatsächlich besteht im Rahmen der Erfindung die Möglichkeit, im Zuge der Festbettentgasung Primärluft und Rauchgas in das Festbett einzublasen. Es können ferner im Zuge der Wirbelschichtvergasung stufenweise Primärluft und Sekundärluft in die Wirbelschicht eingeblasen werden. Dabei besteht die Möglichkeit, mit der Primärluft zusätzlich auch Rauchgas in die Wirbelschicht einzublasen, und zwar zum Zwecke der homogenen Fluidisierung der Wirbelschicht. Die Verweilzeit - analoge Größe zum Abstand zwischen Primär- und Sekundärvergasungsmittelzuführung -, die Wirbelschicht-Temperatur und der Turbulenzgrad der Wirbelschicht unter Berücksichtigung der Vergasungsmittelgeschwindigkeit müssen den Erfordernissen der Gasgualität und folglich den CH-Verbindungen angepaßt werden. Mit der Primärluft der wirbelschichtvergasung wird die Temperatur des Schwelgases und der Holzkohle von etwa 600 °C auf die Wirbelschicht-Temperatur von 800 °C bis 1000 °C erhöht und die Fluidisierung der Wirbelschicht gesteuert. Die Wirbelschicht besteht aus feinkörnigem Sand und Holzkohle. Der Quarzsandanteil sorgt für die Homogenität des Temperaturprofils. Die Holzkohle und das Gas bewegen sich von unten nach oben durch die Wirbelschichtvergasungsstufe hindurch.

Gegenstand der Erfindung ist ferner ein Verfahren zum Vergasen von Biomasse, insbesondere Holzstoffen o. dgl. Vergasungsstoffen, wonach in einer ersten Vergasungsstufe eine Wirbelschichtentgasung bei Temperaturen bis zu 600 °C und einer nachgeschalteten zweiten Vergasungsstufe eine Wirbelschichtvergasung bei Temperaturen von 800 °C bis 1000 °C durchgeführt wird. - Dieses Vergasungsverfahren zeichnet sich durch besonders gleichmäßige Reaktionsbedingungen aus, zumal ständig eine gute Durchmischung des Vergasungsstoffes erreicht werden kann. Ursächlich wird das dann erreicht, wenn an allen Holzstoffpartikeln bzw. deren Oberfläche gleich hohe Stoff- und Wärmeübergangsbedingungen vorliegen. Optimale Zustände werden in einer Wirbelschicht mit homogener Fluidisierung erzielt. Denn daraus resultierend stellt sich auch eine homogene Temperaturverteilung ein und aufgrund eines höheren Turbulenzgrades an der Oberfläche aller Holzstoffpartikel auch eine gleichmäßig hohe Stoff- und Wärmeübergangszahl, kurze Vergasungszeiten und hohe Vergasungswirkungsgrade. Die Verweilzeiten der Holzstoffpartikel hängen dann nur noch von der Partikelgröße und von deren Konsistenz ab. Die Stoff- und Wärmeübergangsbedingungen lassen sich dadurch noch verbessern, daß als Material für die Wirbelschicht gleichmäßige Quarzsandkorngrößen verwendet werden. Bei kleiner Vergasungsstoff-Partikelgröße bzw. Holzstoff-Partikelgröße werden kurze Verweilzeiten bei der Wirbelschichtentgasung erreicht, zumal anteilig wenig Vergasungs- bzw. Holzstoffe im Verhältnis zur inerten Materialmasse der Wirbelschicht vorhanden sind. - In der ersten unteren Wirbelschicht erfolgt eine Entgasung bei relativ niedrigen Temperaturen, wobei nur ein geringer Anteil der Kohlenstoffanteile (Holzkohle, Koks) vergast wird. Hier wird eine Verkleinerung der entgasten Kokspartikel angestrebt. Die leichten, feinkörnigen Holzkohlepartikel, Verhältnis ihrer Dichte etwa 1:10 zur Quarzsanddichte, wandern durch die Sandwirbelschicht hindurch, bis sie im Bereich eines darüber angeordneten Reaktionsraumes gemeinsam mit feinkörnigem Quarzsand eine zweite Wirbelschicht bilden. Um eine katalytische Wirkung der heißen Holzkohlepartikel und ggf. Kokspartikel zu erreichen, wird gezielt Vergasungsmittel zugegeben, um eine Partikelreaktion verzögert fortzuführen, aber nicht abzuschließen. Dadurch wird die Ansammlung einer Holzkohlewirbelschicht erzeugt, die gleichmäßig katalytisch die Crackung der im Schwel- oder Rauchgas der unteren Wirbelschichtentgasungsstufe noch vorhandenen Teerbestandteile beschleunigt. Im oberen Bereich der zweiten Wirbelschicht und folglich Wirbelschichtvergasung wird ebenso gezielt Vergasungsmittel zugeführt, um die Vergasung der Holzkohlepartikel zu beenden und die Wirbelschichtvergasungszone auf die notwendige hohe Temperatur von 800 °C bis 1000 °C, vorzugsweise 950 °C, zu bringen. Im Rahmen der Erfindung besteht die Möglichkeit, im Zuge der Wirbelschichtentgasung vorgewärmte Primärvergasungsmittel zuzuführen, z. B. von unten in die Wirbelschicht einzublasen. Die Primärvergasungsmittel können bis auf 400 °C bis 500 °C vorgewärmt werden. Im Zuge der Wirbelschichtentgasung besteht die Möglichkeit, vorgewärmte Sekundärvergasungsmittel stufenweise zuzuführen, die z. B. seitlich in die Wirbelschicht eingeblasen werden. Die Sekundärvergasungsmittel können auf 400 °C bis 500 °C erwärmt werden. - Bei den Primär- und Sekundärvergasungsmitteln kann es sich im Rahmen der Erfindung um Frischluft, Wasserdampf und Sauerstoff handeln. Darüber hinaus besteht die Möglichkeit, im Zuge der Wirbelschichtentgasung Additivmittel zuzuführen, z. B. in die untere Wirbelschicht einzublasen. - Solche Additivmittel bzw. Additivmaterialien sind im Rahmen der Erfindung z. B. Calciumcarbonat, Calciumhydroxid oder Dolomit. Zweckmäßigerweise werden zwischen der ersten Wirbelschicht und der zweiten Wirbelschicht bis auf 500 °C vorgewärmte Sekundärvergasungsmittel zugeführt, z. B. eingeblasen, während dem oberen Bereich der zweiten Wirbelschicht bis auf 500 °C vorgewärmte Sekundärvergasungsmittel zugeführt werden.

Während das Gas von unten nach oben die beiden Wirbelschichtvergasungszonen durchströmt und sich die Holzkohle im Mittel von unten nach oben bewegt und an einer inneren Zirkulation mit dem Quarzsand teilnimmt, findet in den beiden Vergasungsstufen die vollständige Vergasung der Holzkohle bzw. Kohlenstoffanteile und im oberen Teil die Crackung der Teerbestandteile bzw. hochmolekularen Kohlenwasserstoffverbindungen statt. Erst im oberen Teil der zweiten Vergasungszone, in der Wirbelschichtvergasung wird durch die Zuführung von Sekundärvergasungsmittel der Anteil an unvergaster Holzkohle bzw. Koksanteilen stark verringert und die Geschwindigkeit der Vergasungsstoffpartikel verzögert, um den zu schnellen Austrag von unvergasten Holzkohlepartikeln bzw. Kohlenstofffanteilen zu verhindern und damit den Anteil an verbrennbaren Bestandteilen in der Asche zu minimieren. Im Rahmen der Erfindung besteht grundsätzlich die Möglichkeit, die beiden Vergasungszonen mit Unterdruck oder Überdruck zu betreiben.

Weiter sieht die Erfindung vor, daß vor der Wirbelschichtentgasung der ersten Vergasungsstufe eine Vortrocknung der Vergasungs- bzw. Holzstoffe in einer Trocknungswirbelschicht vorgenommen wird. Derartige Maßnahmen empfehlen sich, um beispielsweise Holz mit hohem Wassergehalt zu trocknen, ferner zur Inertisierung der Eintragszone bzw. Verminderung von Rückreaktionen in der Eintragszone. Dabei kann die Trocknungswirbelschicht im Dampfkreislauf mit leichtem Überdruck betrieben werden. Rückreaktionen meint ein evtl. Zünden des Vergasungs- bzw. Holzstoffes infolge zu hoher Temperaturen in der Eintragszone. Der Trocknungswirbelschicht werden vorzugsweise auf 100 °C bis 120 °C vorgewärmter Sattdampf oder leicht überhitzter Dampf zugeführt bzw. von unten über einen Düsenboden eingeblasen. Über einen in die Trocknungswirbelschicht eintauchenden Wärmeübertrager werden die Vergasungs- bzw. Holzstoffe mit Heißdampf von 4 bis 10 bar oder Gas auf etwa 100 °C bis 120 °C erwärmt. Der Wasserdampf, der aus dem Wasser der Vergasungs- bzw. Holzstoffe entsteht, kann der Trocknungswirbelschicht entnommen oder in die Entgasungszone als Primärvergasungsmittel weitergeleitet werden, um den Heizwert des erzeugten Gases und die Reaktionstemperatur optimal zu gestalten.

Gegenstand der Erfindung ist auch eine Vorrichtung zur Durchführung des Verfahrens mit kombinierter Festbett- und Wirbelschichtvergasung, und zwar mit einem Vergasungsgehäuse, welches einen Vergasungsschacht mit einer oben liegenden Festbettentgasungsstufe und einer unten liegenden Wirbelschichtvergasungsstufe sowie einen sich oberhalb der Wirbelschichtvergasungsstufe an den Vergasungsschacht anschließenden Gasabzug für das erzeugte Gas aufweist. Danach läßt sich ein eingehäusiges Vergasungsverfahren mit Festbett- und Wirbelschichttechnik verwirklichen. Weiter sieht die Erfindung vor, daß von der Festbettvergasungsstufe ein Gasrohr mit einem Holzkohleauffangtrichter bis in den unteren Bereich der Wirbelschichtvergasungsstufe geführt ist. Es besteht aber auch die Möglichkeit, daß von der Festbettentgasungsstufe eine Schachttrennwand unter Bildung eines Gaskanals mit der betreffenden Gehäusewand bis zu dem unteren Bereich der Wirbelschichtvergasungsstufe geführt ist. Die Festbettentgasungsstufe kann einen durchlässigen Boden, z. B. eine arretierbare Bodenklappe aufweisen, welche das Festbett trägt. Zweckmäßigerweise weist der Vergasungsschacht im Bodenbereich der Wirbelschichtvergasungsstufe einen Düsenboden zur Primärluftzuführung und Schwel- oder Rauchgasrückführung auf, nämlich für die Fluidisierung der herabfallenden Holzkohle und des Bettmaterials, vorzugsweise feinkörniger Quarzsand.

Gegenstand der Erfindung ist auch eine Vorrichtung zur Durchführung eines zweistufigen Vergasungsverfahrens in zwei übereinander angeordneten Wirbelschichten. Diese Vorrichtung ist gekennzeichnet durch ein Vergasungsgehäuse mit einem Vergasungsschacht für eine erste Wirbelschichtentgasungsstufe und eine zweite Wirbelschichtvergasungsstufe, wobei sich die Wirbelschichtentgasungsstufe im unteren Schachtbereich befindet und der Vergasungsschacht oberhalb der Wirbelschichtentgasungsstufe eine venturidüsenartige Einschnürung aufweist und sich oberhalb der Einschnürung die Wirbelschichtvergasungsstufe im Zuge des Vergasungsprozesses durch Einblasen von Primärvergasungsmitteln und durch das entstehende Schwelgas von unten nach oben, aus der Wirbelschichtentgasungsstufe in die Wirbelschichtvergasungsstufe von selbst einstellt. - Diese Maßnahmen der Erfindung haben zur Folge, daß die leichten, feinkörnigen Holzkohlepartikel durch die Sandwirbelschicht der unteren Wirbelschichtentgasungsstufe hindurchwandern, bis sie in den Bereich der darüber angeordneten venturidüsenähnlichen Einschnürung bzw. Einengung gelangen, dort beschleunigt werden und in einem oberhalb des eingeengten bzw. eingeschnürten Querschnitts des Vergasungsschachtes gebildeten Reaktionsraum gleichsam mit feinkörnigem Quarzsand die zweite Wirbelschicht und folglich Wirbelschichtvergasungsstufe bilden. Zweckmäßigerweise weist der Vergasungsschacht im Bodenbereich eine Primärvergasungsmittelzuführung und im Bereich der Schachtwandung in stufenartiger Anordnung eine Sekundärvergasungsmittelzuführung für die Wirbelschichtentgasungsstufe und die Wirbelschichtvergasungsstufe auf, so daß der Entgasungs- und Vergasungsprozeß jederzeit entsprechend beeinflußt werden kann. Das gilt auch für den Bereich der Einschnürung, für die eine seitliche Sekundärvergasungsmittelzuführung vorgesehen ist. Ferner kann im Bodenbereich der Wirbelschichtentgasungsstufe ein Eintrag für die Holzstoffe bzw. Vergasungsstoffe an den Vergasungsschacht angeschlossen sein, wobei dieser Eintrag an eine vorgeordnete und höher gelegene Trocknungszone mit einer Zuführung für Vergasungs- bzw. Holzstoffe von oben und einer Zuführung von Trocknungsmittel bzw. Trocknungsdampf von unten angeschlossen ist. Das Trocknungsmittel bzw. der Trocknungsdampf wird im Kreislauf geführt. Der aus dem Vergasungsstoff herausgetriebene Wasserdampf kann aus dem Kreislauf abgezogen werden oder über den Eintrag in die Wirbelschichtentgasungsstufe als Vergasungsmittel zugeführt werden.

Im folgenden wird die Erfindung anhand einer lediglich ein Ausführungsbeispiel darstellenden Zeichnung näher erläutert. Es zeigen:
- Fig. 1: eine Vorrichtung zur Durchführung eines zweistufigen Vergasungsverfahrens mit Festbettvergasung und Wirbelschichtvergasung in schematischem Vertikalschnitt,
- Fig. 2: eine abgewandelte Ausführungsform des Gegenstandes nach Fig. 1 und
- Fig. 3: eine Vorrichtung zur Durchführung eines zweistufigen Vergasungsverfahrens mit zwei übereinander angeordneten Wirbelschichtvergasungsstufen.

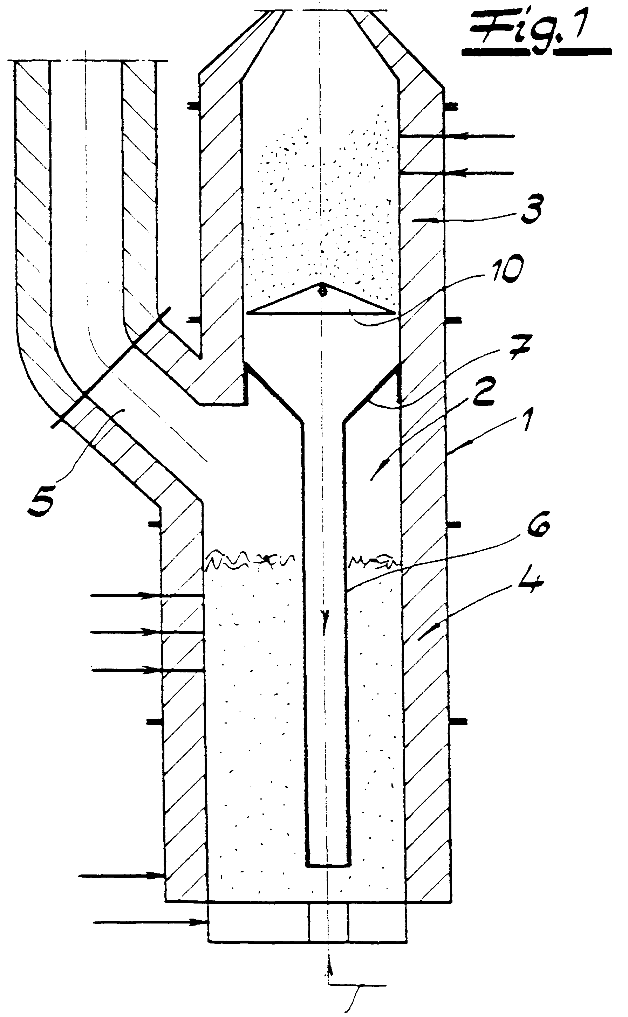

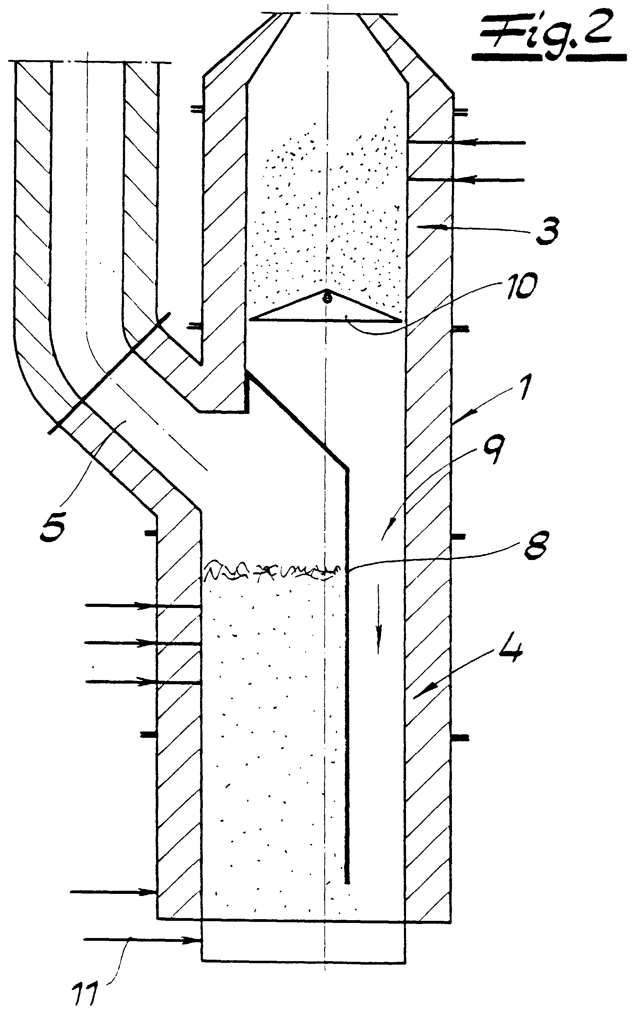

In den Figuren ist eine Vorrichtung zur Durchführung eines eingehäusigen zweistufigen Vergasungsverfahrens dargestellt, und zwar mit einem Vergasungsgehäuse 1, welches einen Vergasungsschacht 2 mit einer oben liegenden Festbettentgasungsstufe 3 und einer unten liegenden Wirbelschichtvergasungsstufe 4 sowie einen sich oberhalb der Wirbelschichtvergasungsstufe 4 an den Vergasungsschacht 2 anschließenden Gasabzug 5 aufweist, welcher nach dem Ausführungsbeispiel parallel zu der oben liegenden Festbettentgasungsstufe 3 verläuft. Bei der Ausführungsform nach Fig. 1 ist von der Festbettentgasungsstufe 3 ein Gasrohr 6 mit Holzkohleauffangtrichter 7 bis in den unteren Bereich der Wirbelschichtvergasungsstufe 4 geführt. Bei der Ausführungsform nach Fig. 2 ist von der Festbettentgasungsstufe 3 eine Schachttrennwand 8 unter Bildung eines Gaskanals 9 mit der betreffenden Gehäusewand in den unteren Bereich der Wirbelschichtvergasungsstufe 4 geführt. In beiden Fällen weist die Festbettentgasungsstufe 3 einen gasdurchlässigen Boden 10, z. B. eine Bodenklappe auf. Der Vergasungsschacht 2 weist im Bodenbereich der Wirbelschichtvergasungsstufe 4 eine Primärluft- und Schwel- oder Rauchgaszuführung 11 auf.

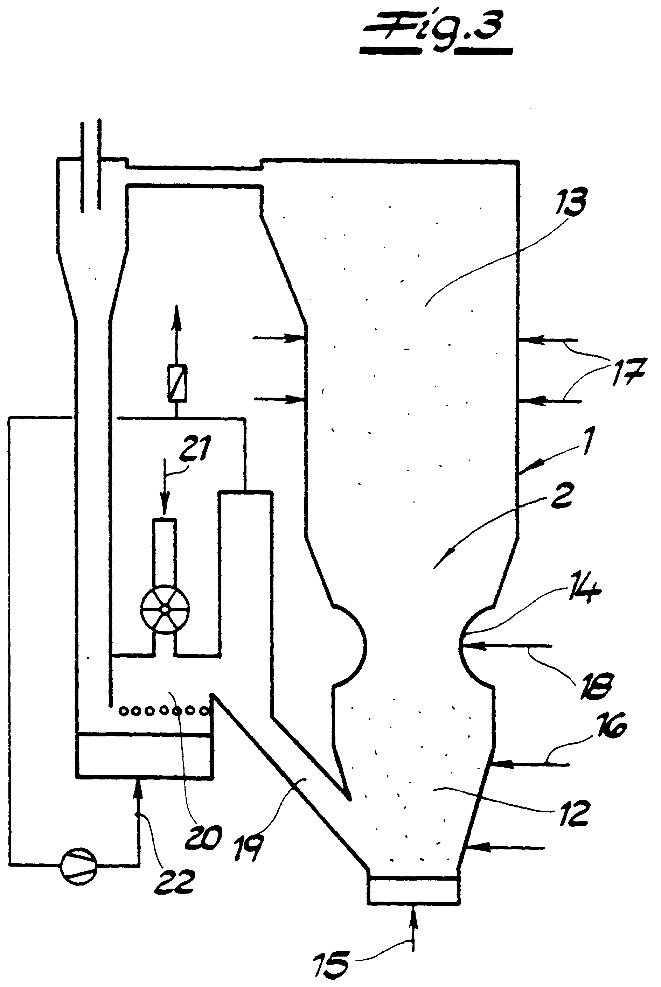

Bei der in Fig. 3 dargestellten Vorrichtung zur Durchführung eines eingehäusigen zweistufigen Vergasungsverfahrens ist ein Vergasungsgehäuse 1 mit einem Vergasungsschacht 2 für eine erste Wirbelschichtentgasungsstufe 12 und eine zweite Wirbelschichtvergasungsstufe 13 verwirklicht, wobei sich die Wirbelschichtentgasungsstufe 12 im unteren Schachtbereich befindet und der Vergasungsschacht 2 oberhalb der Wirbelschichtentgasungsstufe 12 eine venturidüsenartige Einschnürung 14 aufweist. Oberhalb der Einschnürung 14 stellt sich die Wirbelschichtvergasungsstufe 13 im Zuge des Vergasungsprozesses durch Einblasen von Primärvergasungsmitteln und durch das in der Entgasungszone entstehende Schwelgas von selbst ein. Bei dieser Ausführungsform weist der Vergasungsschacht 2 im Bodenbereich ebenfalls eine Primärvergasungsmittelzuführung 15 und im Bereich der Schachtwandung in stufenartiger Anordnung Sekundärvergasungsmittelzuführungen 16, 17 für die Wirbelschichtentgasungsstufe 12 und die Wirbelschichtvergasungsstufe 13 auf. Im Bereich der Einschnürung 14 ist eine seitliche Sekundärvergasungsmittelzuführung 18 vorgesehen. Im Bodenbereich der Wirbelschichtentgasungsstufe 12 ist ein Eintrag für die Vergasungs- bzw. Holzstoffe an den Vergasungsschacht 2 angeschlossen. Dieser Eintrag 19 ist seinerseits an eine vorgeordnete und höhergelegene Trocknungszone 20 mit einer Zuführung 21 für Holzstoffe o. dgl. Vergasungsstoffe von oben und einer Zuführung 22 für Trocknungsmittel wie Trocknungsdampf von unten angeschlossen. Der Trocknungsdampf wird z. B. mit Hilfe eines Dampfventilators im Kreislauf betrieben. Zur Beheizung der Wirbelschicht kann ein Wärmeübertrager, der mit Heißdampf oder heißem Prozeßgas betrieben wird, eingesetzt werden. Der Dampfventilator und der Wärmeübertrager sind nicht dargestellt.

## Patentansprüche

1. Verfahren zum Vergasen von Biomasse, insbesondere Holzstoffen o. dgl. Vergasungsstoffen, wonach in einer ersten Vergasungsstufe eine Festbettentgasung bei Temperaturen bis zu 600 °C und in einer nachgeschalteten zweiten Vergasungsstufe eine Wirbelschichtvergasung bei Temperaturen zwischen 800 °C und 1000 °C durchgeführt wird.

2. Verfahren nach Anspruch 1, dadurch gekennzeichnet, daß im Zuge der Festbettentgasung Primärluft und aus der Wirbelschichtvergasung resultierendes Schwel - oder Rauchgas in das Festbett eingeblasen werden.

3. Verfahren nach Anspruch 1 oder 2, dadurch gekennzeichnet, daß im Zuge der Wirbelschichtvergasung stufenweise Primärluft und Sekundärluft in die Wirbelschicht eingeblasen werden.

4. Verfahren nach einem der Ansprüche 1 bis 3, dadurch gekennzeichnet, daß im Zuge der Wirbelschichtvergasung Additivmaterial als z. B. katalytisch wirkendes feinkörniges Material zugeführt wird.

5. Verfahren nach einem der Ansprüche 1 bis 4, dadurch gekennzeichnet, daß mit der Primärluft zusätzlich Rauchgas aus dem Vergasungsprozeß in die Wirbelschicht eingeblasen wird.

6. Verfahren nach einem der Ansprüche 1 bis 5, dadurch gekennzeichnet, daß die Primärluft und das Rauchgas von unten nach oben in die Wirbelschicht eingeblasen werden.

7. Verfahren zum Vergasen von Biomasse, insbesondere Holzstoffen o. dgl. Vergasungsstoffen, wonach in einer ersten Vergasungsstufe eine Wirbelschichtentgasung bei Temperaturen bis zu 600 °C und in einer nachgeschalteten zweiten Vergasungsstufe eine Wirbelschichtvergasung bei Temperaturen von 800 °C bis 1000 °C durchgeführt werden.

8. Verfahren nach Anspruch 7, dadurch gekennzeichnet, daß im Zuge der Wirbelschichtentgasung vorgewärmte Primärvergasungsmittel zugeführt, z. B. von unten in die Wirbelschicht eingeblasen werden.

9. Verfahren nach Anspruch 7 oder 8, dadurch gekennzeichnet, daß die Primärvergasungsmittel bis auf 500 °C vorgewärmt werden.

10. Verfahren nach einem der Ansprüche 7 bis 9, dadurch gekennzeichnet, daß im Zuge der Wirbelschichtvergasung stufenweise vorgewärmte Sekundärvergasungsmittel zugeführt, z. B. seitlich in die Wirbelschicht eingeblasen werden.

11. Verfahren nach einem der Ansprüche 7 bis 10, dadurch gekennzeichnet, daß die Sekundärvergasungsmittel bis auf 500 °C vorgewärmt werden.

12. Verfahren nach einem der Ansprüche 7 bis 11, dadurch gekennzeichnet, daß im Zuge der Wirbelschichtentgasung Additivmittel zugeführt, z. B. in die erste Wirbelschicht eingeblasen werden.

13. Verfahren nach einem der Ansprüche 7 bis 12, dadurch gekennzeichnet, daß zwischen der ersten Wirbelschicht auf 500 °C vorgewärmte Sekundärvergasungsmittel zugeführt, z. B. eingeblasen werden.

14. Verfahren nach einem der Ansprüche 7 bis 13, dadurch gekennzeichnet, daß der zweiten Wirbelschicht bis auf 500 °C vorgewärmte Sekundärvergasungsmittel zugeführt werden.

15. Verfahren nach einem der Ansprüche 7 bis 14, dadurch gekennzeichnet, daß vor der Wirbelschichtentgasung eine Vortrocknung der Vergasungsstoffe in eine Trocknungswirbelschicht vorgenommen wird.

16. Verfahren nach einem der Ansprüche 7 bis 15, dadurch gekennzeichnet, daß in die Trocknungswirbelschicht bis auf 120 °C erwärmter Sattdampf oder Heißdampf zugeführt, z. B. von unten eingeblasen werden.

17. Verfahren nach einem der Ansprüche 7 bis 16, dadurch gekennzeichnet, daß für die indirekte Beheizung der Trocknungswirbelschicht mit einem Wärmeübertrager Heißdampf oder Heißgas eingesetzt wird.

18. Vorrichtung nach einem der Ansprüche 1 bis 17, dadurch gekennzeichnet, daß ein Trocknungsmittel im Kreislauf betrieben und indirekt mit einem Wirbelschichtwärmeübertrager beheizt wird.

19. Vorrichtung nach einem der Ansprüche 1 bis 18, dadurch gekennzeichnet, daß das Trocknungsmittel bzw. der aus dem Vergasungsstoff ausgetriebene Wasserdampf als Primärvergasungsmittel benutzt oder aus dem Kreislauf abgezogen wird.

20. Vorrichtung zur Durchführung des Verfahrens nach einem der Ansprüche 1 bis 19, mit einem Vergasungsgehäuse (1), welches einen Vergasungsschacht (2) mit einer oben liegenden Festbettentgasungsstufe (3) und einer unten liegenden Wirbelschichtvergasungsstufe (4) sowie einen sich oberhalb der Wirbelschichtvergasungsstufe (4) an den Vergasungsschacht (2) anschließenden Gasabzug (5) für das erzeugte Gas aufweist.

21. Vorrichtung nach Anspruch 20, dadurch gekennzeichnet, daß von der Festbettentgasungsstufe (3) ein Gasrohr (6) bis in den unteren Bereich der Wirbelschichtvergasungsstufe (4) geführt ist.

22. Vorrichtung nach Anspruch 20, dadurch gekennzeichnet, daß von der Festbettentgasungsstufe (3) eine Schachttrennwand (8) unter Bildung eines Gaskanals (9) mit der betreffenden Gehäusewand bis in den unteren Bereich der Wirbelschichtvergasungsstufe (4) geführt ist.

23. Vorrichtung nach einem der Ansprüche 20 bis 22, dadurch gekennzeichnet, daß die Festbettentgasungsstufe (3) einen gasdurchlässigen Boden (10), z. B. eine Bodenklappe aufweist.

24. Vorrichtung nach einem der Ansprüche 20 bis 23, dadurch gekennzeichnet, daß der Vergasungsschacht (2) im Bodenbereich der Wirbelschichtvergasungsstufe (4) eine Primärluft- und/oder Rauchgaszuführung (11) aufweist.

25. Vorrichtung zur Durchführung des Verfahrens nach einem der Ansprüche 7 bis 19, gekennzeichnet durch ein Vergasungsgehäuse (1) mit einem Vergasungsschacht (2) für eine erste Wirbelschichtentgasungsstufe (12) und eine zweite Wirbelschichtvergasungsstufe (13), wobei sich die Wirbelschichtentgasungsstufe (12) im unteren Schachtbereich befindet und der Vergasungsschacht (2) oberhalb der Wirbelschichtentgasungsstufe (12) eine venturidüsenartige Einschnürung (14) aufweist und sich oberhalb der Einschnürung (14) die Wirbelschichtvergasungsstufe (13) im Zuge des Vergasungsprozesses durch Einblasen von Primärvergasungsmittel und durch das entstehende Schwelgas von unten nach oben in die Wirbelschichtvergasungsstufe (12) von selbst einstellt.

26. Vorrichtung nach Anspruch 25, dadurch gekennzeichnet, daß der Vergasungsschacht (2) im Bodenbereich eine Primärvergasungsmittelzuführung (15) und im Bereich der Schachtwandung in stufenartiger Anordnung Sekundärvergasungsmittelzuführungen (16, 17) für die Wirbelschichtentgasungsstufe (12) und die Wirbelschichtvergasungsstufe (13) aufweist.

27. Vorrichtung nach Anspruch 25 oder 26, dadurch gekennzeichnet, daß im Bereich der Einschnürung (14) eine seitliche Sekundärvergasungsmittelzuführung (18) vorgesehen ist.

28. Vorrichtung nach einem der Ansprüche 25 bis 27, dadurch gekennzeichnet, daß im Bodenbereich der Wirbelschichtentgasungsstufe (12) ein Eintrag (19) für die Vergasungsstoffe an den Vergasungsschacht (2) angeschlossen ist, und daß dieser Eintrag (19) an eine vorgeordnete Trocknungszone (20) mit einer Zuführung (21) für Vergasungsstoffe von oben und einer Zuführung (22) für Trocknungsmittel wie Trocknungsdampf von unten angeschlossen ist.
